# EUROPEAN PATENT SPECIFICATION

(11) **EP 4 168 695 B1**
(45) Date of publication and mention of the grant of the patent: **24.01.2024**
(21) Application number: 20735110.7
(22) Date of filing: 23.06.2020
(51) Int. Cl.: F16J 9/20, F15B 15/14, F16J 15/18, F16J 15/3272, F16L 17/04

(54) **WEAR RING AND WEAR RING ARRANGEMENT**
VERSCHLEISSRING UND VERSCHLEISSRINGANORDNUNG
BAGUE D'USURE ET AGENCEMENT DE BAGUE D'USURE

(43) Date of publication of application: 26.04.2023
(73) Proprietor: Trelleborg Sealing Solutions Germany GmbH, 70565 Stuttgart (DE)
(72) Inventor: IVERSEN, Gert Mølsted, 3000 Helsingør (DK); TONNDORFF, Agge, 2830 Virum (DK); KVIST BJERGVANG, Anders, BS232XQ Weston-super-Mare (GB)
(74) Representative: Kohler Schmid Möbus Patentanwälte
(86) International application number: PCT/EP2020/067516
(87) International publication number: WO 2021/259456

(56) References cited:
- JP-A- S5 270 269
- US-A- 5 150 925
- US-A1- 2013 098 329

## Description

The invention relates to a wear ring according to the preamble of claim 1 as well as a wear ring arrangement with a wear ring. Such a wear ring is known e.g. from JP S 52 70269 A.

Wear rings, which are also referred to as guide rings, are used to guide two machine components which are movable relative to one another along/around a movement axis. For instance, wear rings are used to guide a piston or piston rod within a hydraulic cylinder, absorbing transverse forces. At the same time, wear rings prevent mechanical contact of the said machine components thereby optimizing the overall performance and longevity of the respective sealing system which is used for sealing off a sealing gap formed between the two machine components.

Wear rings have for long been typically made of metal, in particular stainless steel or brass. However, non-metallic wear rings have become well established in a wide range of applications as they do offer advantages when compared to their metallic pendants. As to this, the non-metallic wear rings do allow an elimination of an unfavorable local overstressing, show a high degree of wear resistance and a long service life. Further, they offer low friction as well as superior damping characteristics with regards to undesirable vibrations.

Plastic or reinforced plastic wear rings are generally slit such that they have two free ends spaced apart from and facing one another. The wear rings are usually installed in a mounting groove formed by one of the machine components. However, the flexible nature of the wear ring generally necessitates further fixation of the wear ring to the machine component provided with the mounting groove at least until the two machine components are assembled. In practice, this is commonly achieved by bonding the wear ring to the respective machine component. This, however, greatly complicates and delays installation of the wear ring within the dedicated mounting groove and effects an undue increase of manufacturing costs of the wear ring arrangement.

The wear ring known from JP S 52 70269, however, does neither improve the deformation characteristics of the wear ring nor does it improve the assembly process.

US 2013/098329 A1 discloses a wear ring that is formed in one piece and that is slit. The wear ring has a cross-sectional width, which either remains unchanged or sectionally tapers in a radial direction towards the rear side thereof, and is preloaded in a radial direction against a cylinder wall surface by an O-ring. Further, US 5 150 925 A discloses a hose fitting for connecting a hose comprising an inner tube, an intermediate reinforcing layer and an outer cover, by means of a crimping ring.

It is, therefore, the object of the present invention to provide a wear ring as well as a wear ring arrangement which can be mounted more easily and more cost-effectively.

The first object of the invention is solved by the wear ring according to claim 1. The wear ring arrangement according to the invention has the features as given in claim 11.

The wear ring according to the invention is formed in one piece from an elastically deformable plastic or a reinforced plastic material. For instance, PTFE (Polytetrafluoroethylene) or a polyethylene material is considered a suitable material. The wear ring is slit such that it has two free ends. This allows a temporary widening of the wear ring to further facilitate mounting of the wear ring within the mounting groove of a machine component or demounting of the wear ring. The wear ring has a front side, a rear side and two flanks, wherein the wear ring has a cross-sectional width, which, in a radial direction, at least sectionally increases towards the rear side thereof. The wear ring, due to its elastically deformable material, can thus be clipped directly into a mounting groove of a machine component, e.g. a piston/piston rod of a hydraulic or pneumatic piston-cylinder unit, which is designed such as to correspond thereto. The wear ring has one or more recesses which are formed on its front side and/or on its rear side and which serve to facilitate bending/twisting or carding of the wear ring such that the wear ring can be more easily mounted in the mounting groove of the respective machine element, in particular, piston or piston rod. This allows for a quicker and more cost-efficient mounting of the wear ring. It is clear, that the recesses must significantly weaken the material of the wear ring so as to allow for an easier deformation thereof. As to this, the depth of each recess preferably exceeds 20% of the nominal thickness of the wear ring. Further, during use of the wear ring, the recesses can take up accumulating particulate matter to help prevent jams of the machine components arranged movably relative to one another. During mounting of the wear ring, (gluing) the usual bonding of the wear ring to the machine component featuring the mounting groove can be dropped. Further, it needs to be noted that mounting of the wear ring in its predetermined position within the said mounting groove can be more reliably and reproducibly achieved. The said recesses are easy to manufacture and can be realized right during molding of the wear ring or thereafter.

According to the invention, the recesses of the front side and the recesses of the rear side are (each) spaced from one another in the direction of the central axis of the wear ring. This allows for a further facilitated twisting/bending of the wear ring as needed for mounting the wear ring in the said mounting groove of a machine component. This is, in particular, advantageous in wear rings having a larger diameter and which are generally rather difficult to install. Further, an undesirable fracture of the wear ring during its installation or during use can thereby be counteracted.

According to a further embodiment of the invention, the wear ring has, in each cross-section and over its entire circumferential extension, a single recess or a plurality of recesses, in particular two, three or four recesses, wherein the overall depth of all recesses in each cross-section of the wear ring is greater than two thirds of the nominal thickness of the wear ring. This allows for a high degree of deformability of the wear ring yet preserves a sufficient strength of the wear ring to resist an unwanted prying of the wear ring out of the mounting groove once placed therein. According to a preferred embodiment of the invention, the overall depth of all the recesses in each cross-section of the wear ring is greater than the nominal thickness of the wear ring.

Each or at least part of the recesses can be formed as a groove. The said grooves can have groove flanks which, in the cross section, are arranged symmetrically relative to a centre axis of the recess/groove arranged perpendicular to the front side of the wear ring or the median plane of the wear ring.

According to a further embodiment of the invention, in the cross-section of the wear ring, the centre axis of a respective groove can be inclined with respect to the local radius or median plane the wear ring.

The respective opening angle δ of at least part of or each of the recesses of the wear ring is preferably between 25° and 60°, in particular between 30° and 50°. The recesses of the wear ring can have the same or different opening angle δ.

Moreover, in a cross-sectional view of the wear ring, at least a part of the recesses/grooves can show a dilated bottom section. The recesses/grooves thus comprise a bubble- or cup-shaped cavity. This can further enhance the flexible deformability of the wear ring without sacrificing too much of the functional support surface on the front and/or rear side thereof. Further, each or part of the said recesses of the wear ring may be formed as a blind hole, or even as a through-recess or slit.

According to a preferred embodiment of the invention, the wear ring has, at least sectionally or over its entire circumferential extension, a dovetail cross-sectional shape. This allows for a bilateral engagement of the machine component featuring the mounting groove once the wear ring has been clipped into the said groove. By this, the wear ring will stay in its predetermined position within the mounting groove even when subjected to shear stress.

According to an alternative embodiment of the invention, the wear ring, on at least one or on each of its side flanks, has one or more lateral projections extending away from the respective side flank. These projections, due to the elastically deformable material of the wear ring, can be easily deflected and thus allow for an even easier insertion/clipping of the wear ring into the respective mounting groove of a machine component. In case of a plurality of projections arranged on the respective side flank, these are preferably spaced at regular intervals from one another in the circumferential direction of the wear ring.

The lateral projections preferably have a triangular or a rectangular cross-sectional shape. This is easy to manufacture, in particular by injection molding, and allows for an easy clipping of the wear ring into the mounting groove as well as for a secure seat therein.

The wear ring arrangement according to the invention comprises
- a first and a second machine component which are movable along and/or around a movement axis relative to one another, confining a sealing gap therebetween, wherein one of the machine components is provided with a mounting groove confined by grove flanks forming bilateral undercuts; and
- a wear ring as described above and which is clipped into said mounting groove in a detachable fashion and which prevents a direct mechanical contact of the said machine components.

According to the invention, the machine component having the mounting groove and the wear ring are preferably joined together by a dovetail joint. This allows an easy mounting and securing of the wear ring in its predefined mounting position within the mounting groove without the need for further fixation means such as glue and the like. Further, the mounting of the first and second machine component, e.g. a piston rod/piston and a cylinder, can thereby be facilitated and accelerated. This further allows for cost advantages. Also, it needs to be noted that a replacement of the wear ring is greatly facilitated without the need for a laborious removal of the wear ring.

### BRIEF DESCRIPTION OF SEVERAL VIEWS OF THE DRAWINGS

The accompanying drawings are included to provide a further understanding of the invention and are incorporated in and constitute a part of this specification, illustrate embodiments of the invention, and together with the description serve to explain the principles of the invention.
- Fig. 1: is a perspective view of a slit wear ring according to the invention;
- Fig. 2: is a sectional view of a wear ring arrangement according to the invention comprising a first and a second machine component, here a piston or piston rod and a cylinder, and several wear rings clipped into their predetermined mounting position within a mounting groove of one of the machine components for guidance of the first and second machine component relative to one another;
- Fig. 3: a cross-sectional detailed view of the wear ring assembly according to Fig. 2;
- Fig. 4: a top view of the wear ring according to Fig. 3;
- Fig. 5: a cross sectional view of a further embodiment of the wear ring according to the invention;
- Fig. 6: a cross sectional view of a further embodiment of the wear ring according to the invention;
- Fig. 7: a cross sectional view of a further embodiment of the wear ring according to the invention;
- Fig. 8: a cross sectional view of a further embodiment of the wear ring according to the invention;
- Fig. 9: a top view of a further wear ring according to the invention;
- Fig. 10: a cross-sectional view of the wear ring according to Fig. 9 cut along the sectional plane designated B-B in Fig. 9;
- Fig. 11: a top view of further embodiment of the wear ring according to the invention having circular recesses on its front side only as well as lateral projections on one of its flanks;
- Fig. 12: a cross-sectional view of the wear ring according to Fig. 11 cut along the sectional plane designated C-C in Fig. 11;
- Fig. 13: a cross-sectional view of the wear ring according to Fig. 11 cut along the sectional plane designated D-D in Fig. 11; and
- Fig. 14: a top view of further embodiment of the wear ring according to the invention which has a serrated edge portion on one of its sides.

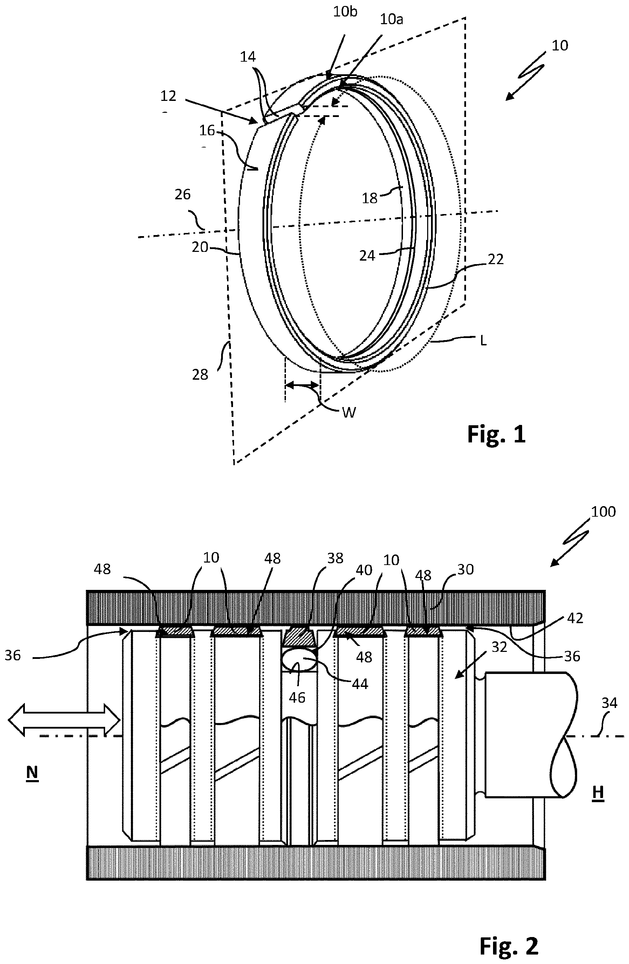

**Fig. 1** depicts a perspective view of a slit wear ring **10** for guidance of two machine components movable relative to one another along/around a movement axis. The wear ring serves to handle transverse loads to prevent an undesirable direct mutual contact of the said machine components. The wear ring features a base segment **10a** for mounting the wear ring 10 in a mounting groove of one of the machine components and a wearing or supporting segment **10b** for contact of the respective other machine component. Due to slit **12** of the wear ring 10, the wear ring 10 has two free ends **14** in the circumferential direction thereof which are facing one another.

The wear ring 10 comprises a front side **16** and a rear side **18** which are facing away from one another and two lateral flanks **20**, **22.** The wear ring 10 is made in one piece and consist of an elastically deformable plastic or reinforced plastic material. For instance, the plastic material can comprise fibers (not shown in the Figures) or other suitable mechanically and/or thermally reinforcing compounds or a dry lubricant as needed.

The wear ring 10 features a recess **24** which, by way of example, is arranged on its rear side 18. The recess may extend over the entire circumferential extension **L** of the wear ring 10. The function of the recess 24 is explained in further detail below. The central axis of the wear ring is designated **26** and the median plane of the wear ring 10 is designated **28.** The width of the wear ring is designated **W.**

**Fig. 2** depicts a cross-sectional view of a wear ring arrangement **100** comprising a first machine component **30** and a second machine component **32** which are arranged spaced apart from one another and which are movable relative to one another along a movement axis **34.** The wear ring arrangement 100, as a mere example, is formed as a piston-cylinder unit, wherein the first machine component 30 is a cylinder and the second machine component 32 is a piston or a piston rod. Said piston-cylinder unit can, for instance, be used in a hydraulic or pneumatic pump. The two machine components 30, 32 can, in particular, be made of metal.

There is a sealing gap **36** formed in a radial direction between the two machine components 30, 32. At least one sealing element (sealing ring) **38** serves to seal off a high-pressure side **H** relative to a low-pressure or atmospheric side **N** of the wear ring arrangement 100. The sealing element 38 is seated in a holding groove **40** of the second machine component 32. It is to be understood, that there can alternatively be two or more such sealing elements 38 arranged in a respective holdding groove 40 wherein the holding grooves 40 are arranged spaced apart from one another in an axial direction with respect to the movement axis 34.

The sealing element 38 is pretensioned in a radial direction against a counter surface **42** of the first machine component 30 in a dynamically sealing manner by a pretensioning element **44.** The pretensioning element 44 itself is arranged in the holding groove 40 and may, for instance, be formed as an elastomeric O-ring. The pretensioning elements 44 abuts against both the sealing element 38 and the respective groove base **46** of the holding groove 40 in a statically sealing manner.

There are several slit wear rings 10 which are each arranged spaced apart from each other in an axial direction and each of which is seated in a respective mounting groove **48** of the second machine component 32. Each of the wear rings 10 projects in a radial direction into the sealing gap 36 and may abut against the sealing surface 42 of the first machine component 30 intermittently or at all times. During operation of the wear ring arrangement 100, the wear rings 10 guide the second machine element 32 and absorb transverse loads as well as prevent an adverse and possibly detrimental direct (metal-to-metal) contact between the two machine components 30, 32. It is understood that the plastic or reinforced plastic material of the wear rings 10 needs to have a sufficient load capacity, and advantageously allows for a low friction and a stick-slip free operation. The wear rings 10 further protect the critical sealing element 38 from an unwanted overload.

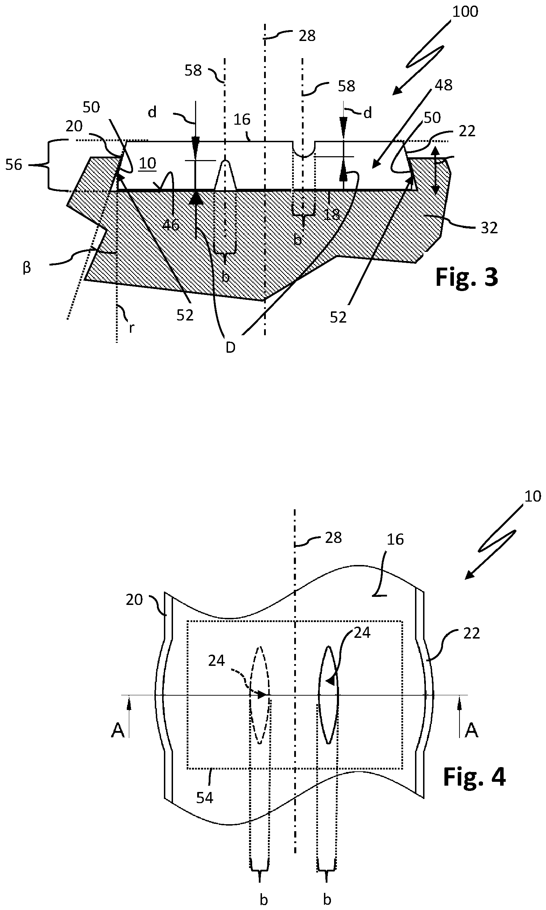

Each of the mounting grooves 48 of the second machine component 32 shows a cross-section that widens in a radial direction towards the groove base 46 of the mounting groove as depicted in more detail in **Fig. 3****.** The groove flanks **50** of the respective mounting groove 48 thus each form an undercut **52** behind which the respective wear ring 10 engages in a radial direction. The base segment 10a of the wear ring 10 has a cross-sectional shape which corresponds or basically corresponds to the cross-sectional shape of the mounting groove 48. According to the embodiment shown in Figs. 2 and 3, the wear ring 10 may has sloped or chamfered flanks 20, 22 which engage behind the undercut 52 formed by correspondingly slanted mounting groove flanks 50. The flanks 20, 22 of the wear ring as well as the groove flanks 50 of the mounting groove 48 are arranged at an acute angle **β** with respect to the local radius **r** of the wear ring 10.

The second machine element 32 and the respective wear ring 10 seated therein, each form a dovetail joint by which the wear ring 10 is securely fixed in its predetermined mounting position. The dovetail-joint allows for a mounting of the wear ring 10 on the respective machine component 30, 32 without the need for further fixation means such as glue and the like.

As has been pointed out above, each wear ring 10 consists of an elastically deformable plastic or reinforced plastic material. To further facilitate mounting of the wear ring 10 within the mounting groove of the respective machine component 30, 32, the wear ring 10 is provided with one recess 24 (Fig. 1) or more recesses 24 on its front side 16 and/or on its rear side 18 which allow for an easier twisting/bending (or carding) of the slit wear 10 ring.

According to the embodiment of the wear ring 10 shown in Figs. 3 and **4**, there is provided a plurality of recesses both on the front side 16 as well as on the rear side of the wear ring 10. The recesses of each side 16, 18 of the wear ring 10 are arranged spaced apart from one another in the circumferential direction of the wear ring 10.

The number of recesses 24 per surface area **54** of the wear ring 10, their dimensioning, in particular depth, is preferably chosen dependent on the elastic material properties and the geometry of the respective wear ring 10.

All recesses of the front side 16 and/or all the recesses of the rear side 18 of the wear ring 10 may have the same dimensions. However, the recesses 24 of the front side 16 may actually differ from the recesses 24 of the rear side 18, in particular have a different, e. g. smaller, depth **d** (as is shown in Fig. 3) and/or different, e. g. smaller, maximum width **b.**

Of note, in each cross-section of the wear ring 10 showing a single recess 24 or a plurality of recesses 24, the overall depth **D** of all recesses 24 in each cross-section of the wear ring 10 over its entire circumferential extension is advantageously greater than two thirds of the nominal thickness **56** of the wear ring 10.

Further, the recesses 24 of the front side 16 and recesses 24 of the rear side 18 of the wear ring 10 are preferably spaced from one another in the direction of the central axis 26 (Fig. 1) of the wear ring 10 in any cross section of the wear ring 10. By this, an undesirable damage to or rupture of the wear ring 10 during mounting as well as during operation thereof can be prevented. Further, as depicted in Fig. 3, the centre axis **58** of the recesses 24 of the wear ring 10 can be arranged parallel the median plane 28 of the wear ring 10.

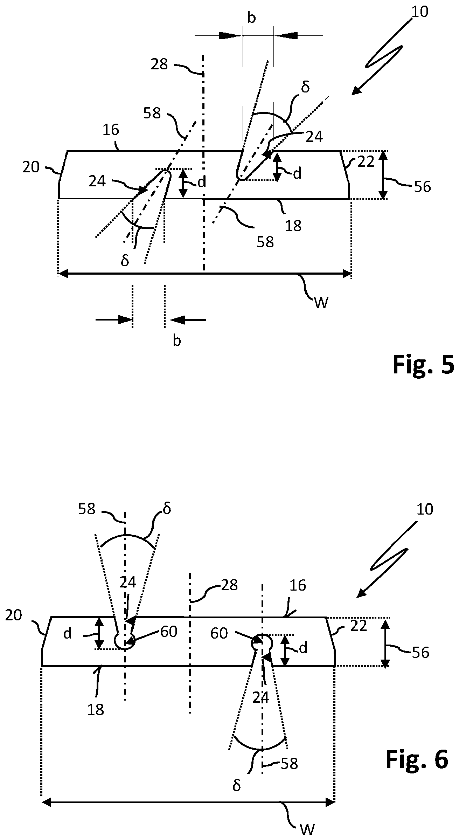

According to the wear ring 10 shown in **Fig. 5**, the centre axis 58 of the respective recesses 24 can also be arranged inclined relative to the median plane 28 of the wear ring 10. This may actually be beneficial in wider wear rings 10 or wear rings 10 with a larger diameter as this allows for an increased extension of the recesses 24 into the wear ring 10 without putting the wear ring 10 at risk for mechanical failure.

According to Figures 5 and 6, the respective opening angle **δ** of at least part or all of the recesses 24 of the wear ring 10 is preferably between 25° and 60°, in particular between 30° and 50°. The recesses 24 of the wear ring 10 can have the same or different opening angles δ.

The recesses 24 can be extending in a strictly circumferential direction of the wear ring. However, the recesses 24 may also be configured as holes with a circular, triangular or other suitable geometry for increasing the deformability of the wear ring 10.

Of note, the recesses 24 have a further advantage. As particulate matter tends to build up between in the sealing gap 36 (Fig. 2) of the wear ring arrangement 100 after a prolonged operation time, the recesses 24 can take up such particulate matter to help prevent jams of the machine components 30, 32 arranged movably relative to one another.

According to **Fig. 6**, at least part of the recesses 24 of the wear ring 10 may widen in the radial direction with respect to the median plane 28 (Fig. 1) of the wear ring 10 and thus show a dilated bottom section **60.**

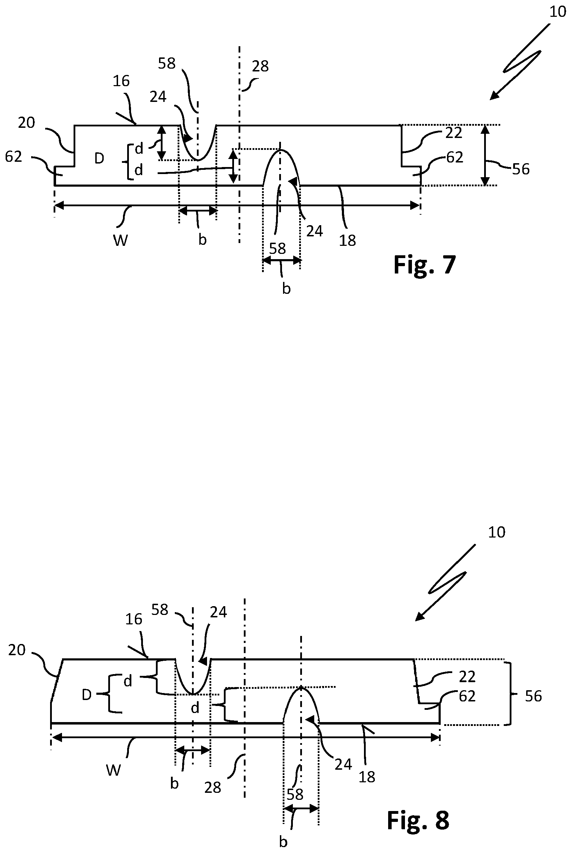

The wear ring 10 does not necessarily need to have chamfered side flanks 20, 22 to engage behind undercuts 52 (c. f. Fig. 3) formed by the groove flanks 50 of the mounting groove 48 of the respective machine element 30, 32. The wear ring 10 may, for instance, alternatively show a T-shaped cross section as depicted in **Fig. 7****.** The wear ring 10 hence has a lateral projection **62** on each of his lateral flanks 20, 22. These lateral projections 62, merely by way of non limiting example, each may have a rectangular cross-sectional shape. The lateral projections 62 engage behind a correspondingly formed undercut 52 (Fig. 3) of the mounting groove flanks 50. The mounting groove 48, in this instance, shows a correspondingly formed T-shaped cross-section.

According to a further embodiment shown in **Fig. 8**, the wear ring 10 may alternatively feature a chamfered first flank 20 and a second flank 22 having a lateral projection 62 as described above in context with Fig. 7. The lateral projection 62 and/or the chamfered flank 20 of the wear ring 10 may extend over the entire circumferential extension L (Fig. 1) of the wear ring 10. Alternatively, thee lateral projections 62 and/or the chamfered flanks 20, 22 are just provided sectionally on the wear ring 10 along the circumferential direction thereof.

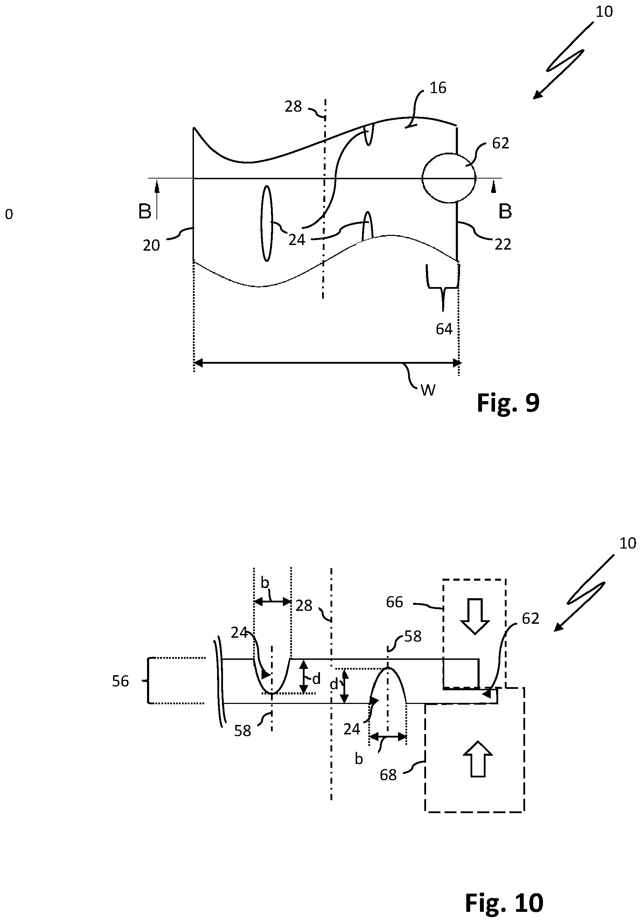

In **Fig. 9**, for example, there is shown a partial view of a wear ring 10 which has several lateral projections 62 extending from both of its flanks 20, 22. The lateral projections 62, on each flank 20, 22, are arranged spaced apart from one another in the circumferential direction of the wear ring 10. The lateral projection 62 shown in Fig. 9 is depicted in **Fig. 10** in a cross-sectional view of the wear ring 10 along sectional plane "B-B" in Fig. 9. Each of said lateral projections 62 can be formed either right by molding of the wear ring 10 or, alternatively, by pressure shaping the lateral edge portion **64** of the wear ring 10 (Fig. 9). This can be done, for instance, by means of a compression die **66** and a thrust bearing **68** as shown in dotted lines in **Fig. 10****.** This allows for a simple an cost-effective manufacturing of the wear ring 10 independently of its actual size.

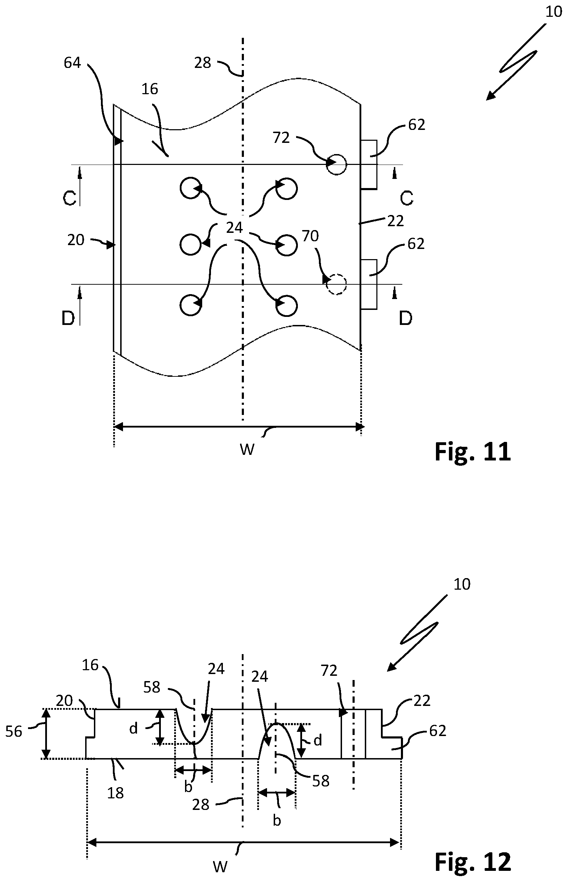

To further improve the plastic flow of the wear ring 10 material during the pressure shaping there can be made a further impression **70** or even a perforation **72** which, according to **Fig. 11**, is located offset inward in an axial direction with regards to the centre axis 26 of the wear ring 10 (c. f. Fig. 1) in relation to the lateral projection 62 to be formed. The wear ring 10 may, according to Fig. 11, have a plurality of circular recesses 24 formed on its front side for facilitating twisting/carding of the wear ring during insertion in the mounting groove 48 (Fig. 2). The circular recesses may be blind or even through-holes.

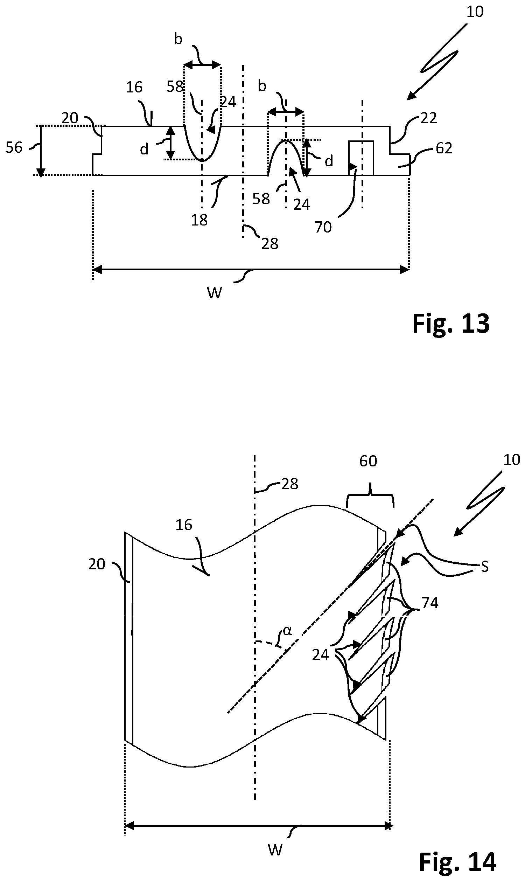

The perforation 72 is depicted in more detail in the cross-sectional view according to **Fig. 12** along section "C-C" in Fig. 11 of the wear ring, whereas in **Fig. 13**, the impression 70 is shown in more detail in a cross-sectional view along section "D-D" in Fig. 11.

According to the further wear ring 10 shown in **Fig. 14**, the edge portion 64 of the wear ring 10 can be serrated. The serrations **74** may be simply formed by lateral incisions or through-recesses 24 which run at an acute angle α with respect to the median plane 28 of the wear ring 10. These serrations 74 can be flexed relative to the remaining wear ring 10 and thus allow for a rather simplified mounting the wear ring 10 in the mounting groove 48 of the respective machine element 30, 32 (Fig. 2).

## Claims

1. Wear ring (10) for guidance of two machine components (30, 32) which are arranged movably relative to one another along/around a movement axis (34), the wear ring (10) being formed in one piece from a plastic or a reinforced plastic material and which is slit such that it has two free ends (14), wherein the wear ring (10) has a front side (16), a rear side (18) and two flanks (20, 22), wherein the wear ring (10) has a cross-sectional width W, which, with respect to the wear ring's (10) central axis (26), at least sectionally increases in a radial direction towards the rear side (18) thereof and wherein the wear ring (10) has one or more recesses (24) formed on its front side (16) and on its rear side (18),
**characterized in that**
the recesses (24) of the front side (16) and the recesses (24) of the rear side (18) are spaced from one another in the direction of the central axis (26) of the wear ring (10) and the recesses (24) of each side (16, 18) of the wear ring (10) are arranged spaced apart from one another in the circumferential direction of the wear ring (10).

2. Wear ring (10) according to claim 1, **characterized in that** the wear ring (10), in each of its cross-sections, has a single recess (24) or a plurality of recesses (24), the overall depth (d) of all recesses (24) of each the respective cross-sections being greater than two thirds of the nominal thickness (56) of the wear ring (10).

3. Wear ring (10) according to any one of the preceding claims, **characterized in that** the recesses (24) are formed as grooves or as circular holes.

4. Wear ring (10) according to claim 3, **characterized in that** each of the recesses has flanks (50) in the cross section of the wear ring (10), which are arranged symmetrically relative to a centre axis (58) of the respective recess (24), the centre axis (58) being arranged parallel to the median plane (28) of the wear ring (10).

5. Wear ring (10) according to claim 4, **characterized in that** in the cross-section of the wear ring (10), the centre axis of at least part of the recesses (24) is inclined with respect to the median plane (28) of the wear ring (10).

6. Wear ring (10) according to any one of the preceding claims 3 to 5, **characterized in that** in a cross-sectional view of the wear ring (10), at least part of the recesses (24) show a dilated bottom section (60).

7. Wear ring (10) according to any one of the preceding claims, **characterized in that** the wear ring (10) has, at least sectionally, a dovetail cross-sectional shape.

8. Wear ring (10) according to claim 1, **characterized in that** the wear ring (10), on at least one or on both of its side flanks (18, 20), has one or more lateral projections (58) extending away from the respective side flank (20, 22).

9. Wear ring (10) according to claim 8, **characterized in that** the plurality of lateral projections (58) on a respective side flank (20, 22) of the wear ring (10) are arranged spaced apart from one another in the circumferential direction of the wear ring (10) at regular intervals.

10. Wear ring (10) according to claim 8 or 9, **characterized in that** the lateral projections (58) have a triangular or a rectangular cross-sectional shape.

11. Wear ring arrangement (100) comprising:
- a first and a second machine component (30, 32) which are arranged movably along/around a movement axis (34) relative to one another; and
- a wear ring (10) according to any one of the preceding claims and which is clipped into a mounting groove (48) with bilateral undercuts (52) of one of the said machine components (30, 32) in a detachable fashion.

12. Wear ring arrangement (100) according to claim 11, **characterized in that** the machine component (30, 32) having the mounting groove (48) and the wear ring (10) are joined together by a dovetail joint.

13. Wear ring arrangement (100) according to claim 11, **characterized in that** the wear ring arrangement is formed as a piston-cylinder unit and wherein the first machine component (30) is a cylinder and the second machine component (32) is a piston or a piston rod.

## Patentansprüche

1. Verschleißring (10) zur Führung von zwei Maschinenteilen (30, 32), die entlang einer/um eine Bewegungsachse (34) relativ zueinander beweglich angeordnet sind, wobei der Verschleißring (10) einstückig aus einem Kunststoff oder einem verstärkten Kunststoffmaterial geformt ist und so geschlitzt ist, dass er zwei freie Enden (14) aufweist, wobei der Verschleißring (10) eine Vorderseite (16), eine Rückseite (18) und zwei Flanken (20, 22) aufweist, wobei der Verschleißring (10) eine Querschnittsbreite W aufweist, die in Bezug auf die Mittelachse (26) des Verschleißrings (10) in radialer Richtung zu dessen Rückseite (18) hin zumindest abschnittsweise zunimmt und wobei der Verschleißring (10) eine oder mehrere Aussparungen (24) aufweist, die an seiner Vorderseite (16) und an seiner Rückseite (18) ausgebildet sind,
**dadurch gekennzeichnet,**
**dass** die Aussparungen (24) der Vorderseite (16) und die Aussparungen (24) der Rückseite (18) in Richtung der Mittelachse (26) des Verschleißrings (10) voneinander beabstandet sind und die Aussparungen (24) jeder Seite (16, 18) des Verschleißrings (10) in Umfangsrichtung des Verschleißrings (10) voneinander beabstandet angeordnet sind.

2. Verschleißring (10) nach Anspruch 1, **dadurch gekennzeichnet, dass** der Verschleißring (10) in jedem seiner Querschnitte eine einzelne Aussparung (24) oder eine Mehrzahl von Aussparungen (24) aufweist, wobei die Gesamttiefe (d) aller Aussparungen (24) aller jeweiligen Querschnitte größer als zwei Drittel der Nenndicke (56) des Verschleißrings (10) ist.

3. Verschleißring (10) nach einem der vorhergehenden Ansprüche, **dadurch gekennzeichnet, dass** die Aussparungen (24) als Nuten oder als kreisförmige Löcher ausgebildet sind.

4. Verschleißring (10) nach Anspruch 3, **dadurch gekennzeichnet, dass** jede der Aussparungen Flanken (50) im Querschnitt des Verschleißrings (10) aufweist, die symmetrisch relativ zu einer Mittelachse (58) der jeweiligen Aussparung (24) angeordnet sind, wobei die Mittelachse (58) parallel zur Mittelebene (28) des Verschleißrings (10) angeordnet ist.

5. Verschleißring (10) nach Anspruch 4, **dadurch gekennzeichnet, dass** im Querschnitt des Verschleißrings (10) die Mittelachse zumindest eines Teils der Aussparungen (24) in Bezug auf die Mittelebene (28) des Verschleißrings (10) geneigt ist.

6. Verschleißring (10) nach einem der vorhergehenden Ansprüche 3 bis 5, **dadurch gekennzeichnet, dass** in einer Querschnittsansicht des Verschleißrings (10) mindestens ein Teil der Aussparungen (24) einen erweiterten Bodenabschnitt (60) aufweist.

7. Verschleißring (10) nach einem der vorhergehenden Ansprüche, **dadurch gekennzeichnet, dass** der Verschleißring (10) zumindest abschnittsweise eine schwalbenschwanzförmige Querschnittsform aufweist.

8. Verschleißring (10) nach Anspruch 1, **dadurch gekennzeichnet, dass** der Verschleißring (10) an mindestens einer oder an beiden seiner Seitenflanken (18, 20) einen oder mehrere seitliche Vorsprünge (58) aufweist, die sich fort von der jeweiligen Seitenflanke (18, 20) erstrecken.

9. Verschleißring (10) nach Anspruch 8, **dadurch gekennzeichnet, dass** die Mehrzahl von seitlichen Vorsprüngen (58) an einer jeweiligen Seitenflanke (20, 22) des Verschleißrings (10) in Umfangsrichtung des Verschleißrings (10) in regelmäßigen Abständen voneinander beabstandet angeordnet ist.

10. Verschleißring (10) nach Anspruch 8 oder 9, **dadurch gekennzeichnet, dass** die seitlichen Vorsprünge (58) eine dreieckige oder eine rechteckige Querschnittsform aufweisen.

11. Verschleißringanordnung (100) umfassend:
- ein erstes und ein zweites Maschinenteil (30, 32), die entlang einer/um eine Bewegungsachse (34) relativ zueinander beweglich angeordnet sind; und
- einen Verschleißring (10) nach einem der vorhergehenden Ansprüche, der mit beidseitigen Hinterschneidungen (52) eines der Maschinenteile (30, 32) in eine Montagenut (48) lösbar eingerastet ist.

12. Verschleißringanordnung (100) nach Anspruch 11, **dadurch gekennzeichnet, dass** das die Montagenut (48) aufweisende Maschinenteil (30, 32) und der Verschleißring (10) durch eine Schwalbenschwanzverbindung miteinander verbunden sind.

13. Verschleißringanordnung (100) nach Anspruch 11, **dadurch gekennzeichnet, dass** die Verschleißringanordnung als Kolben-Zylinder-Einheit ausgebildet ist und wobei das erste Maschinenteil (30) ein Zylinder und das zweite Maschinenteil (32) ein Kolben oder eine Kolbenstange ist.

## Revendications

1. Bague d'usure (10) pour l'orientation et le guidage de deux composants de machine (30, 32) qui sont agencés de façon mobile et amovible l'un par rapport à l'autre le long/autour d'un axe de déplacement (34), la bague d'usure (10) étant formée selon une seule pièce à partir d'une matière plastique ou d'un matériau de matière plastique renforcée et laquelle bague d'usure est fendue de telle sorte qu'elle comporte deux extrémités libres (14), dans laquelle la bague d'usure (10) comporte un côté avant (16), un côté arrière (18) et deux flancs (20, 22), dans laquelle la bague d'usure (10) présente une largeur en coupe transversale W, laquelle largeur, par rapport à un axe central (26) de la bague d'usure (10), augmente, au moins au niveau de certains endroits ou tronçons, dans une direction radiale en direction de son côté arrière (18) et dans laquelle la bague d'usure (10) comporte un ou plusieurs évidements (24) qui est ou sont formé(s) sur son côté avant (16) et sur son côté arrière (18) ;
**caractérisée en ce que** :
les évidements (24) du côté avant (16) et les évidements (24) du côté arrière (18) sont espacés les uns des autres dans la direction de l'axe central (26) de la bague d'usure (10) et les évidements (24) de chaque côté (16, 18) de la bague d'usure (10) sont agencés de telle sorte qu'ils soient espacés les uns des autres dans la direction circonférentielle de la bague d'usure (10).

2. Bague d'usure (10) selon la revendication 1, **caractérisée en ce que** la bague d'usure (10), selon chacune de ses sections en coupe transversale, comporte un unique évidement (24) ou une pluralité d'évidements (24), et la profondeur totale (d) de tous les évidements (24) de chacune des sections en coupe transversale respectives est plus grande que les deux tiers de l'épaisseur nominale (56) de la bague d'usure (10).

3. Bague d'usure (10) selon l'une quelconque des revendications précédentes, **caractérisée en ce que** les évidements (24) sont formés en tant que rainures ou que trous circulaires.

4. Bague d'usure (10) selon la revendication 3, **caractérisée en ce que** chacun des évidements comporte des flancs (50) selon la section en coupe transversale de la bague d'usure (10), lesquels flancs sont agencés de façon symétrique par rapport à un axe central (58) de l'évidement respectif (24), l'axe central (58) étant agencé parallèlement au plan médian (28) de la bague d'usure (10).

5. Bague d'usure (10) selon la revendication 4, **caractérisée en ce que**, selon la section en coupe transversale de la bague d'usure (10), l'axe central d'au moins une partie des évidements (24) est incliné par rapport au plan médian (28) de la bague d'usure (10).

6. Bague d'usure (10) selon l'une quelconque des revendications précédentes 3 à 5, **caractérisée en ce que**, selon une vue en coupe transversale de la bague d'usure (10), les évidements d'au moins une partie des évidements (24) présentent une section de fond dilatée (60).

7. Bague d'usure (10) selon l'une quelconque des revendications précédentes, **caractérisée en ce que** la bague d'usure (10) comporte, au moins au niveau de certains endroits ou tronçons, une forme en coupe transversale en queue d'aronde.

8. Bague d'usure (10) selon la revendication 1, **caractérisée en ce que** la bague d'usure (10), sur au moins l'un de ses flancs de côté (18, 20) ou sur ses deux flancs de côté, comporte une ou plusieurs projections latérales (58) qui est ou sont étendue(s) à distance du flanc de côté respectif (20, 22).

9. Bague d'usure (10) selon la revendication 8, **caractérisée en ce que** les projections latérales de la pluralité de projections latérales (58) sur un flanc de côté respectif (20, 22) de la bague d'usure (10) sont agencées de telle sorte qu'elles soient espacées les unes des autres dans la direction circonférentielle de la bague d'usure (10) selon des intervalles réguliers.

10. Bague d'usure (10) selon la revendication 8 ou 9, **caractérisée en ce que** les projections latérales (58) présentent une forme en coupe transversale triangulaire ou rectangulaire.

11. Agencement de bague d'usure (100) comprenant :
- des premier et second composants de machine (30, 32) qui sont agencés de façon mobile et amovible l'un par rapport à l'autre le long/autour d'un axe de déplacement (34) ; et
- une bague d'usure (10) selon l'une quelconque des revendications précédentes et qui est clipsée à l'intérieur d'une rainure de montage (48) qui comporte des dégagements en contre-dépouilles (52) de l'un desdits composants de machine (30, 32) d'une façon libérable.

12. Agencement de bague d'usure (100) selon la revendication 11, **caractérisé en ce que** le composant de machine (30, 32) qui comporte la rainure de montage (48) et la bague d'usure (10) sont joints l'un à l'autre au moyen d'un assemblage en queue d'aronde.

13. Agencement de bague d'usure (100) selon la revendication 11, **caractérisé en ce que** l'agencement de bague d'usure est formé en tant qu'unité de piston-cylindre et dans lequel le premier composant de machine (30) est un cylindre et le second composant de machine (32) est un piston ou une tige de piston.
